# EUROPÄISCHE PATENTSCHRIFT

(11) **EP 2 787 093 B1**
(45) Veröffentlichungstag und Bekanntmachung des Hinweises auf die Patenterteilung: **04.08.2021**
(21) Anmeldenummer: 14156708.1
(22) Anmeldetag: 26.02.2014
(51) Int. Cl.: C22B 11/00

(54) **Verfahren zur Herstellung hochreinen Platinpulvers sowie Platinpulver erhältlich nach diesem Verfahren und Verwendung**
Method for the production of high purity platinum powder and platinum powder obtained with the method and use
Procédé de fabrication d'une poudre de platine haute pureté, poudre de platine pouvant être obtenue selon ce procédé et son utilisation

(30) Priorität: 05.03.2013 DE 102013203743
(43) Veröffentlichungstag der Anmeldung: 08.10.2014
(73) Patentinhaber: Heraeus Deutschland GmbH & Co. KG, 63450 Hanau (DE)
(72) Erfinder: Kralik, Joachim, 63450 Hanau (DE); Stettner, Martin, 63674 Altenstadt (DE); von Eiff, Hermann, 63543 Neuberg (DE); Schapp, Jan, 60596 Frankfurt (DE)
(74) Vertreter: Heraeus IP

(56) Entgegenhaltungen:
- EP-A1- 1 061 145
- DE-A1- 4 042 030
- JP-A- 2008 038 159
- KR-B1- 100 758 877
- A.F. HOLLEMANN, E. WIBERG: "Lehrbuch der Anorganischen Chemie", 1. Januar 1985 (1985-01-01), Walter de Gruyter, Berlin New York, XP002727892, ISBN: 3110075113 Seiten 1204-1205, * S. 1024-5 *
- "Platinum group metals ED - Weinheim : Wiley-VCH; 2011", 1. Januar 2011 (2011-01-01), ULLMANN'S ENCYCLOPEDIA OF INDUSTRIAL CHEMISTRY, 7TH EDITION,, PAGE(S) 318 - 352, XP009179403, ISBN: 978-3-527-32943-4 * S. 329; S. 335-338; S. 343; S. 346 *
- None

## Beschreibung

Gegenstand der Erfindung ist ein Verfahren zur Herstellung von hochreinem Platin im industriellen Maßstab. Nach dem erfindungsgemäßen Verfahren wird ein Hexahalogenoplatinat unter sauren Bedingungen zu Platin reduziert.

Es ist seit langem bekannt, Platin durch Reduktion einer wässrigen Lösung eines Kaliumhexachloroplatinatsalzes herzustellen. Nachteilig bei diesem Verfahren ist die Tatsache, dass der erhaltene Platinschlamm in mehreren Waschgängen kaliumionenfrei gewaschen werden muss, was sich zum einen nachteilig im hohen Verbrauch des Waschwassers und zum anderen in der sich dadurch verschlechternden Qualität des Schwamms äussert. Zur Herstellung von mikroelektronischen Bauteilen wird immer häufiger gefordert ein Platin mit einem Gehalt an Platin von > 5N (99,999 Gew.-% Pt) zur Verfügung zu stellen.

So bestehen Forderungen Platin als Ausgangsmaterial zur Herstellung von Thermoelementen oder zur Anwendung im Elektronikbereich in sehr hoher Reinheit bereitzustellen. Vor allem für die Herstellung von Oberflächenbeschichtungen für die magnetische Datenspeicherung wird gefordert ein Platinpulver mit einer Gesamtverunreinigung durch andere Metalle von durchschnittlich unter < 5 Gew.-ppm zur Verfügung zu stellen. Vor allem zur Herstellung von Thermoelementen wird ein hochreines Platin gefordert, da die Thermospannung bei einer Temperaturmessung in einem Thermoelement sehr empfindlich auf Verunreinigungen im Platin reagiert. Besondere Probleme bereitet die Entfernung von Kalium und Eisen. Eisen ist eine schwer zu entfernende metallische Verunreinigung, die in vielen Scheidgutmaterialien und im Produktionsumfeld einer Edelmetallraffinerie auftritt.

Die EP 1 061 145 A1 offenbart ein Verfahren zur Herstellung eines Pt-Schwamms indem eine H₂PtCl₆-Lösung mit Hydrazin reduziert wird. Dabei wird zunächst eine wäßrige Hexahalogenoplatinat-Lösung über einen Kationenaustauscher gegeben und anschließend die erhaltene Lösung bei einer Temperatur T > +30°C und einem pH-Wert von 0 bis 4 mittels eines Reduktionsmittels zur Ausfällung in Form eines Platinschwamms reduziert. Der nach diesem Verfahren hergestellte Platinschwamm weist aufgrund des Ursprungs der H₂PtCl₆-Lösung, die aus einer K₂PtCl₆-Lösung in einem lonentauscher hergestellt wurde, einen deutlich zu hohen Gehalt an Kalium im Platinschwamm auf. Darüber hinaus ist das in der EP 1 061 145 A1 offenbarte Verfahren nicht in der Lage den Eisengehalt zu vermindern.

In "Platinum group metals ED - Weinheim: Wiley-VCH; 2011 ", 2011, ULLMANN'S ENCYCLOPEDIA OF INDUSTRIAL CHEMISTRY, 7TH EDITION, S. 318-352, ISBN: 978-3-527-32943-4 ist auf Seite 349 offenbart, dass Hexachloroplatinate üblicherweise in wässriger Lösung oder Suspension mit Hydrazin im Basischen zu Platinschwarz reduziert werden können.

Die US 3,620,713 offenbart die Herstellung von Platin durch Reduktion einer ammoniakalischen Platinlösung mit Hydrazin im Alkalischen bei pH-Wert 9 bis 11. Nachteil dieses Verfahrens ist die unzureichende Abtrennung von Eisen, das als Eisenhydroxid im Platinschwamm mit eingebunden wird.

Üblicherweise ist schwerlösliches K₂PtCl₆-Salz das Endprodukt der Feinreinigung von Platin. Durch Wiederholung einer Folge von Auflösungs- und Wiederausfällvorgängen kann dieses in sehr hoher Reinheit bzgl. des Platingehaltes erhalten werden. Das reine Salz wird häufig als Ausgangsmaterial für die Herstellung von Platinmetall durch Reduktion der Platinverbindung verwendet. Dabei liegt der Fokus darauf das Platinsalz für den Reduktionsschritt bereits in möglichst hoher Reinheit einzusetzen, denn vor allem eine Verunreinigung durch andere Edelmetalle lässt sich im Reduktionsschritt nur noch sehr unzureichend vermindern.

Bekannte Verfahren zur Aufreinigung von Platinverbindungen umfassen die elektrolytische Abscheidung aus einer H₂PtCl₆-Lösung. Sie erfolgt nach vorangegangenem Kationenaustausch und einer kathodischen Abscheidung von Platinschwamm. Nachteilig ist hier, dass alle in der salzsauren Platinlösung enthaltenen Verunreinigungen, insbesondere Edelmetalle, mit abgeschieden werden, wie nachfolgend anhand des Beispiels 5 aufgezeigt wird. Ein weiteres Verfahren sieht die Überführung von K₂PtCl₆ in (NH₄)₂PtCl₆ und anschließende Kalzinierung des Salzes bei höherer Temperatur vor. Ein Nachteil ist die Freisetzung großer von Ammoniumchlorid, die eine besondere Ofen-/Wäschertechnik erfordern. Auch die Gefahr durch eine Kontamination des Platinpulvers durch eisenrosthaltigen Staub in der Ofenatmosphäre ist in diesem Verfahren erhöht.

Ein anderes Verfahren basiert auf der Reduktion von K₂PtCl₆ im H₂-Gasstrom bei erhöhter Temperatur. Nachteil dieses Verfahrens ist die Verunreinigung des Platinpulvers mit Kaliumchlorid. Kaliumchlorid kann mit einem unwirtschaftlich hohen Aufwand vollständig ausgewaschen werden.

Die nasschemische Reduktion von Platinsalzen mit geeigneten Reduktionsmitteln ist generell bekannt.

So offenbart die US 3620713 (A) eine Hydrazinreduktion in alkalischer Lösung. Dies hat aber zum Nachteil, dass noch in Lösung in Spuren enthaltene Buntmetallsalze, sowie auch Eisen, ebenfalls als Hydroxid ausgefällt werden und somit den Platinschwamm verunreinigen. Aus der US 3620713 (A) ist die Reduktion eines Komplexes von Platinammoniumhydroxid bekannt. Unter Buntmetallen wird eine Untergruppe der Nichteisenmetalle unter Ausschluss der Edelmetalle erfasst. Buntmetalle umfassen Metalle wie Cadmium (Cd), Cobalt (Co), Kupfer (Cu), Nickel (Ni), Blei (Pb), Zinn (Sn) und Zink (Zn).

Aufgabe der Erfindung war es, ein Verfahren zu entwickeln, das die Nachteile des Standes der Technik vermeidet und in der Lage ist ein hochreines Platin herzustellen, in dem der Gehalt an Alkalimetallen, insbesondere an Kalium oder Natrium deutlich vermindert ist. Eine weitere Aufgabe bestand darin, die weiteren Edelmetalle mit Ausnahme von Platin als Matrixmetall deutlich zu reduzieren. Darüber hinaus sollten auch die Metalle der Kupfergruppe und/oder möglichst die Buntmetalle deutlich reduziert werden können. Ferner soll das Verfahren, möglichst ohne zusätzliche Verfahrensschritte, in der Lage sein auch den Gehalt der Hauptverunreinigung nämlich an Eisen zu vermindern. Eine weitere Aufgabe bestand darin, ein Verfahren zu finden, das vorzugsweise kontinuierlich oder zumindest in Teilschritten kontinuierlich durchführbar ist. Darüber hinaus soll das Verfahren großtechnisch durchführbar sein. Eine weitere Aufgabe bestand darin ein möglichst wirtschaftliches Verfahren aufzufinden, indem die vorgenannten Metalle vorzugsweise in nur wenigen Schritten abgetrennt werden können. Darüber hinaus sollten als Edukte kostengünstige Verbindungen eingesetzt werden können.

Die Aufgabe der Erfindung wurde gemäß dem Verfahren des Anspruchs 1 gelöst, bevorzugte Ausführungsformen sind in den Unteransprüchen und detailliert in der Beschreibung erläutert.

Es wurde überraschend gefunden, dass trotz Verwendung eines schlechtlöslichen Platinkomplexsalzes durch die erfindungsgemäß erfolgende Reduktion im Sauren hochreine Platinschwämme gewonnen werden können. Denn bei Durchführung der Reduktion in saurer Lösung oder Suspension (pH 0-4) bleiben Eisensalze in Lösung bzw. in der wässrigen Phase und führen zu keiner Verunreinigung des Pt-Schwamms. Auf diese Weise können auch die Buntmetalle vom auszufällenden Platin abgetrennt werden.

Die Verwendung von Stickstoff enthaltendem schwerlöslichem Hexahalogenoplatinat, wie vorzugsweise (NH₄)₂PtCl₆, als Ausgangsverbindung für die Reduktion hat zusätzlich den Vorteil, dass die Herstellung des Stickstoff enthaltenden Hexahalogenoplatinats einen weiteren Reinigungsschritt durch Ausfällung des schwerlöslichen (NH₄)₂PtCl₆ einschließt. Insbesondere noch enthaltene Spuren anderer Edelmetalle lassen sich aufgrund dieser Fällung aus verdünnter Lösung gut abtrennen. Die direkte Verwendung von K₂PtCl₆ bzw. des durch lonenaustausch hieraus erzeugten H₂PtCl₆ in der Hydrazin-Reduktion führen gewöhnlich zu schlechterer Produktqualität des Platinschwamms, wie die Beispiele 3 und 4 belegen. Die später im Pt-Schwamm noch enthaltenen Ammoniumsalzreste lassen sich optional nach dem Waschen mit Wasser auch durch Glühen des Pt-Schwamms bei 800°C vollständig entfernen.

Die direkte Reduktion von K₂PtCl₆ bzw. des durch lonenaustausch hieraus erzeugten H₂PtCl₆ in der Hydrazin-Reduktion führen gewöhnlich zu einer deutlich schlechteren Produktqualität des Platinschwamms und insbesondere höheren Verunreinigungen mit Kalium oder generell mit Alkalimetallen, mit Eisen, den Edelmetallen mit Ausnahme von Platin als auch an Buntmetallen. Selbst der Gehalt an Schwefel, Bor und Phosphor kann durch das erfindungsgemäße Verfahren im Vergleich zu bekannten Verfahren sehr deutlich vermindert werden. Die vorgenannten metallischen Verunreinigungen können mitunter auch nicht vollständig ausgewaschen werden, wie die Vergleichsbeispiele Beispiele 3 und 4 gemäß dem Verfahren der EP 1061145A1 aufzeigen.

Kernschritt des erfindungsgemäßen Verfahrens ist die Reduktion von (NH₄)₂PtCl₆, die nasschemisch erfolgen kann. Bevorzugt ist die reduktive Abscheidung von Platin mit Hilfe von metallfreien organischen Reduktionsmitteln, die wasserlösliche und thermisch zersetzbare Salze oder flüchtige Verbindungen bilden. Erfindungsgemäß umfasst der Kernschritt die Reduktion von (NH₄)₂PtCl₆ mit Hydrazin, da dies die Herstellung eines völlig salzfreien Platinpulvers ermöglicht. Noch vorhandenes NH₄Cl kann leicht durch Erhitzen entfernt werden wie die Beispiele 1 und 2 aufzeigen. Darüber hinaus umfasst das erfindungsgemäße Verfahren eine definierte Kombination von Verfahrensschritten, die vor dem Reduktionsschritt weitere Verfahrensschritte umfasst und ausgeht von der Umsetzung einer wässrigen Hexahalogenoplatinatlösung, vorzugsweise eine Alkalihexahalogenoplatinat-Lösung, weiter bevorzugt Kaliumhexahalogenoplatinat, ein Ammoniumhexahalogenoplatinat oder eine Mischung enthaltend die beiden vorgenannten Hexahalogenplatinat Verbindungen, die mit einem Kationentauscher in Kontakt gebracht wird, vorzugsweise einem stark sauren Kationentauscher vom Sulfonsäure-Typ. Durch diesen ersten Schritt (i) werden die Kationen des Hexahalogenoplatinats, vorzugsweise des Alkalihexahalogenoplatinats oder Ammoniumhexahalogenoplatinats, durch Protonen ausgetauscht und so die freie Hexahalogenoplatinsäure erhalten. Erfindungsgemäß werden Kaliumionen gegen Protonen ausgetauscht. Alternativ werden Ammonium-Ionen gegen Protonen ausgetauscht. In geringem Maße können im lonentauscherprozess weitere kationische Verunreinigungen entfernt werden.

Der Rückhalt im lonentauscher ist jedoch, wie die Beispiele 3 und 4 im Vergleich zum erfindungsgemäßen Reinigungsschritt der Beispiele 1 und 2 zeigen, nicht sehr ausgeprägt. Eine sehr gute Verminderung der metallischen Verunreinigungen und/oder der Verunreinigungen umfassend Bor, Schwefel und/oder Phosphor kann erst durch den zweiten Schritt (ii) der Herstellung des Stickstoff enthaltenden Hexahalogenoplatinats und nachfolgender saurer Reduktion (Schritt v) zum Platinschwamm erzielt werden.

Erfindungsgemäß wird eine sehr reine, metallionenfreie, wässrige Hexahalogenoplatinsäurelösung erhalten, die vor dem Reduktionsschritt zu einem Stickstoff enthaltenden Hexahalogenoplatinat umgesetzt wird. Nachfolgend wird diese Verbindung mittels eines Reduktionsmittels bei einer Temperatur von T größer gleich +30 °C und bei einem pH-Wert von 0 bis 4 zur Ausfällung reduziert, insbesondere bei pH 0 bis 3,5, bevorzugt 0 bis 2,5.

Der resultierende Platinschwamm muss nicht mehr metallionenfrei gewaschen werden. Ein zweiter besonderer Vorteil des erfindungsgemäßen Verfahrens ist die Bildung thermisch zersetzbarer Stickstoffverbindungen als Nebenprodukte, vorzugsweise von Ammonium, wie Ammoniumchlorid. Auch der hohe Waschwasserverbrauch bekannter Verfahren kann durch das erfindungsgemäße Verfahren auf ein Minimum reduziert werden, bei gleichzeitig gesteigerter Qualität des Platinschwamms.

Es wurde gefunden, dass bei Durchführung der Reduktion der Stickstoff enthaltenden Verbindung in saurer Lösung, bei pH 0 bis 4, die Eisensalze in Lösung bleiben und daher zu keiner Verunreinigung des Pt-Schwamms führen. Auch die Buntmetalle lassen sich durch die Herstellung des Stickstoff enthaltenden Hexahalogenoplatinats sehr gut abtrennen, wie die Beispiele 1 und 2 belegen.

Bevorzugt wird als Stickstoff enthaltendes Hexahalogenoplatinat (NH₄)₂PtCl₆ eingesetzt. Ebenso kann (NR₄)₂PtCl₆ der Formel I mit R jeweils unabhängig Alkyl mit 1 bis 10 C-Atomen oder Wasserstoff sowie bifunktionelle Reste, die ein aromatisches System bilden, können als Stickstoff enthaltendes Hexahalogenoplatinat eingesetzt werden. Bevorzugt können als R jeweils unabhängig Methyl, Ethyl und/oder Wasserstoff substituierte Verbindungen eingesetzt werden, wie (CH₃)NH₃⁺, (CH₃)₂NH₂⁺ (CH₃)₃NH⁺, (CH₃CH₂)(CH₃)₂NH⁺, (CH₃CH₂)₃NH⁺, (CH₃CH₂)₂(CH₃)NH⁺, (CH₃)₄N⁺, Pyridinium der Formel I. Als Gegenionen eignen sich Halogenide, vorzugsweise Chlorid. Die Verwendung von (NH₄)₂PtCl₆ als Ausgangsverbindung für die Reduktion ist besonders bevorzugt, da außer Wasserstoff keine zusätzlichen Elemente wie Kohlenstoff eingetragen werden.

Durch das erfindungsgemäße Verfahren ist ein Pt-Schwamm mit einer Reinheit von 99,999 Gew.-% und einem Eisenverunreinigungsanteil von < 1 ppm erhältlich. Ein besonderer Vorteil des erfindungsgemäßen Verfahrens ist die kontinuierliche Herstellung von Platinpulver, die eine Reinheit von größer 99,999 Gew.-% aufweisen. Die Verunreinigung mit Eisen oder Kalium beträgt kleiner gleich 1 Gew.-ppm. Die erfindungsgemäß erhältlichen Platinpulver weisen somit einen Gehalt an Platin von größer 99,999 Gew.-% auf, je nach Verfahrensführung kann Platin kontinuierlich als Platinpulver mit einem Gehalt von größer 99,9995 Gew.-% erhalten werden.

Die Mischung ist erfindungsgemäß eine Suspension eines Stickstoff enthaltenden Hexahalogenoplatinats und Wasser. Vorzugsweise weist das Stickstoff enthaltende Hexahalogenoplatinat eine Löslichkeit in Wasser von kleiner gleich 8,0 g/1000 mL bei 20 °C auf, insbesondere beträgt die Löslichkeit kleiner gleich 7,0 g/1000 mL bei 20 °C, bevorzugt kleiner 6,8 g/1000 mL bei 20 °C. Alternativ oder zusätzlich sollte das Stickstoff enthaltende Hexahalogenoplatinat eine Löslichkeit in Wasser von kleiner gleich 15,0 g/100 mL bei 100 °C aufweisen, insbesondere kleiner gleich 14,0 g/100 mL bei 100 °C, bevorzugt kleiner 13,0 g/100 mL bei 100 °C. Weiter bevorzugt bildet das Stickstoff enthaltende Hexahalogenoplatinat, insbesondere das Hexachloroplatinat in Gegenwart des Reduktionsmittels als Produkt Platin in Form eines Platinschwamms und als Nebenprodukt ein unter thermischen Bedingungen zersetzbares Salz, insbesondere ein wasserlösliches Salz. Weiter bevorzugt weist das Stickstoff enthaltende Hexachloroplatinat eine Löslichkeit in Wasser von kleiner gleich 8,0/1000 mL bei 20 °C auf. Das erfindungsgemäß verwendete Ammoniumhexachloroplatinat weist eine Löslichkeit in Wasser von kleiner gleich circa 6,7 g/1000 mL bei 20 °C (bei RT: 18 bis 25 °C) auf, insbesondere liegt die Löslichkeit bei kleiner gleich 12,5 g/100 mL bei 100 °C. Bevorzugt ist (NH₄)₂PtCl₆ mit einer Löslichkeit in Wasser von kleiner gleich 0.67 g/100 mL (20 °C). Vorteilhaft erfolgt die Fällung des Stickstoff enthaltenden Hexahalogenoplatinats aus leicht saurer Lösung, beispielsweise bei pH 2,5 bis 5. Bevorzugt können Konzentrationen von 5 bis 10 g Platin in 100 ml Lösung sein. Ebenso vorteilhaft kann nach in einer Alternative a) weiteres Fällungsmittel, wie Ammoniumchlorid, zur weiteren Ausfällung zugegeben werden. Ebenso kann b) ein aldehydfreier Alkohol zugegeben werden. Die Maßnahmen a) und b) zur Ausfällung werden vorteilhaft jedoch erst nach Abtrennung des zuvor - ohne diese Zusätze gefällten Stickstoff enthaltenden Hexahalogenoplatinats - durchführt, um noch gelöstes Platin-Salz für eine anderweitige Aufreinigung möglichst vollständig zurückzugewinnen. Je nach Reinheit kann das über die Maßnahmen a) und/oder b) gefällte Stickstoff enthaltende Hexahalogenoplatinat ebenfalls der Reduktion zugeführt werden.

Darüber hinaus ist es bevorzugt, wenn die Mischung auf 35 bis 80 °C erwärmt wird und vorzugsweise gerührt wird. Ferner ist es vorteilhaft, wenn während der Zugabe des Reduktionsmittels die Temperatur unterhalb 80 °C gehalten wird. Der pH-Wert liegt während der Reduktion zwischen 0 bis 4. Nach der Zugabe des Reduktionsmittels wird die Temperatur der resultierenden Reaktionsmischung auf größer gleich 85 °C eingestellt, vorzugsweise auf größer gleich 90 °C, insbesondere für 1 bis 10 Stunden. Durch diese Maßnahme wird überschüssiges Reduktionsmittel wie Hydrazin durch katalytische Zersetzung entfernt.

In dem Verfahren verwendbare Reduktionsmittel sind ausgewählt aus metallfreien organischen Reduktionsmitteln vorzugsweise Hydrazin, Hydrazin-Hydrat, Hydrazinhydrohalogenid, vorteilhaft entspricht das Halogenid dem Halogenid des Hexahalogenoplatinats, wie Chlor, Ascorbinsäure, Ameisensäure und Oxalsäure. Besonders bevorzugte Reduktionsmittel sind ausgewählt aus Hydrazin und Hydrazin-Hydrat.

Im Anschluss an die Reduktion und Entfernung des überschüssigen Reduktionsmittels wird der Platinschwamm vorteilhaft, aufkonzentriert, indem die überstehende wässrige Lösung oder hochverdünnte Suspension abdekantiert wird. Der erhaltene Platinschwamm wird mit vollentsalztem Wasser mehrfach gewaschen, insbesondere zwei bis 20 mal, vorzugsweise 2 bis 4 mal. Anschließend kann der Platinschwamm filtriert werden, und optional weiter mit vollentsalztem Wasser gewaschen werden.

Entsprechend einer bevorzugten Verfahrensführung wird der Platinschwamm abgetrennt und optional gewaschen. Anschließend wird der Platinschwamm thermisch bei einer Temperatur oberhalb circa 350 °C behandelt, vorzugsweise oberhalb 400 °C. Weiter bevorzugt erfolgt eine Behandlung des Platinschwamms bei einer Temperatur oberhalb 450 °C, 500 °C, 550 °C, 650 °C, 700 °C, 750 °C, besonders bevorzugt bei größer gleich 800 °C und vorteilhaft unterhalb des Schmelzpunktes von Platin. Die Behandlungszeit kann 30 Minuten bis 10 Stunden betragen, vorzugsweise erfolgt die Behandlung für 1 bis 3 Stunden, vorzugsweise um 1,5 Stunden.

Das erfindungsgemäß verwendete Stickstoff enthaltende Hexahalogenoplatinat, insbesondere mit einer Löslichkeit in Wasser von kleiner gleich 8,0 g/1000 mL bei 20 °C, vorteilhaft kleiner gleich 7,0 g/1000 mL bei 20 °C, wird hergestellt, indem eine Lösung eines Dihydrogenhexahalogenoplatinats im Sauren in ein Stickstoff enthaltendes Hexahalogenoplatinat überführt wird.

Dazu wird ein Dihydrogenhexahalogenoplatinat, insbesondere eine salzsaure Dihydrogenhexahalogenoplatinat-Lösung, mit einer Ammoniumchlorid-Lösung vermischt. Vorzugsweise wird die Dihydrogenhexahalogenoplatinat-Lösung unter definierten Bedingungen zu einer Ammoniumchlorid-Lösung zugegeben und vermischt. Alternativ kann auch ein Ammoniumchlorid, insbesondere als Ammoniumchlorid-Lösung zum Dihydrogenhexahalogenoplatinat zugegeben werden, vorteilhaft unter Durchmischung. Das gebildete Ammoniumhexachloroplatinat fällt als Niederschlag aus und wird vorteilhaft filtriert und optional mit vollentsalztem Wasser gewaschen. Alternativ kann der Niederschlag dekantiert oder in der Zentrifuge abgetrennt werden.

Auf diese Weise kann je nach eingesetztem Stickstoff enthaltenden Halogensalz, R₄N⁺Hal⁻, mit R wie vorstehend definiert und Hal gleich Halogen, insbesondere Chlor, das Stickstoff enthaltende Hexahalogenoplatinat hergestellt werden.

Dabei wird das Stickstoff enthaltende Hexahalogenoplatinat hergestellt, indem eine Lösung eines Dihydrogenhexahalogenoplatinats in Gegenwart von Ammoniumchlorid, insbesondere im Sauren, vorteilhaft in Gegenwart von Chlorwasserstoffsäure, zu Ammoniumhexahalogenoplatinat, bevorzugt zu Ammoniumhexachloroplatinat, umgesetzt wird. Besonders bevorzugt ist das Dihydrogenhexachloroplatinat, das in salzsaurer Lösung in Gegenwart von Ammoniumchlorid in Ammoniumhexachloroplatinat überführt wird, insbesondere bildet das Ammoniumhexachloroplatinat einen Niederschlag. Weiter ist es bevorzugt ein thermisch verflüchtigbares Kation zu verwenden, das thermisch zersetzbare Salze bildet.

Erfindungsgemäß wird die Lösung des Dihydrogenhexahalogenoplatinat hergestellt, indem ein in der Hitze in Wasser gelöstes Hexahalogenoplatinat, vorteilhaft bei 50 bis 90 °C, bevorzugt bei 60 bis 80 °C, weiter bevorzugt bei 65 oder 70 °C jeweils bis 75°C, insbesondere ein Alkalihexahalogenoplatinat, bevorzugt Kaliumhexahalogenoplatinat, besonders bevorzugt ein Alkalihexachloroplatinat, wie Kaliumhexachloroplatinat, oder Ammoniumhexahalogenoplatinat, wie Ammoniumhexachloroplatinat, mit einem sauren lonentauscher in Kontakt gebracht wird. Gemäß einer besonders bevorzugten Verfahrensvariante wird die Lösung des Dihydrogenhexahalogenoplatinat hergestellt, indem ein Kaliumhexahalogenoplatinat oder Ammoniumhexahalogenoplatinat mit einem sauren lonentauscher in Kontakt gebracht wird. Besonders bevorzugt wird Kaliumhexachloroplatinat mit dem sauren lonentauscher in Kontakt gebracht. In vorteilhafter Weise wird als Hexahalogenoplatinat-Lösung eine Kaliumhexahalogenoplatinat-Lösung oder eine Ammoniumhexahalogenoplatinat-Lösung verwendet, da dieses Platinat in vorangehenden Verfahrensschritten einfach isoliert werden kann. Darüber hinaus ist eine Hexachloroplatinat-Lösung von Vorteil, da bekannte Scheideverfahren oft in salzsaurem Medium durchgeführt werden und das Hexachloroplatinat in diesem Medium die stabile Spezies ist.

Darüber hinaus ist es von Vorteil, wenn die Lösung nach dem Kationenaustauscherdurchlauf eingedampft wird. Erfindungsgemäß wird eine gesättigte wässrige Lösung des Dihydrogenhexahalogenoplatinat mit Ammoniumchlorid in Kontakt gebracht. Dabei ist es generell möglich die Lösung des Dihydrogenhexahalogenoplatinats zu einer Lösung von Ammoniumchlorid zuzugeben oder Ammoniumchlorid als Feststoff oder in Lösung zur Lösung des Dihydrogenhexahalogenoplatinats zuzugeben.

Vorteilhaft wird die Lösung des Dihydrogenhexahalogenoplatinats auf einen Pt-Gehalt von etwa 30 Gew.- % (w/w) in Bezug auf die Gesamtzusammensetzung eingestellt. Vorteilhaft durch Eindampfen. Die anschließende Umsetzung mit Ammoniumchlorid kann dann im Wesentlichen quantitativ erfolgen. Später wird auch die Reduktion mit einer definierten Konzentration an Ammoniumhexachloroplatinat in der Reduktionsmischung durchgeführt, damit das erhaltene Platin kompakter anfällt und sich besser dekantieren und/oder filtrieren lässt und pro kg erzeugtem Platinschwamm weniger Waschwasser anfällt.

Entsprechend dem erfindungsgemäßen Verfahren wird das gewonnene Dihydrogenhexahalogenoplatinat im Umlaufverdampfer bei einer Temperatur zwischen 100 bis 130 °C eingedampft. Dieser Verfahrensschritt kann kontinuierlich durchgeführt werden.

Dabei wird als Reduktionsmittel Hydrazin, Hydrazinhydrat, Ascorbinsäure, Ameisensäure oder Oxalsäure verwendet, da sich diese Substanzen in der Praxis bewährt haben. Ebenso können als Reduktionsmittel oder Aktivator Hydrochinone einzeln oder bevorzugt in einer Zusammensetzung mit einem der vorgenannten Reduktionsmittel als Aktivator eingesetzt werden. Erfindungsgemäß wird eine Lösung umfassend Hydrazin und Hydrochinon eingesetzt. Besonders bevorzugt sind Reduktionsmittel die nach der eigenen Oxidation gasförmige Bestandteile oder wasserlösliche Salze und/oder thermisch zersetzbare Salze bilden.

Schliesslich wird in vorteilhafter Weise die Reduktion zu Platin bei einer Temperatur von +55 °C bis +95 °C durchgeführt, vorteilhaft bei 60 °C bis 75 °C um Platinpulver zu erhalten und Verspiegelungen bzw. massive Abscheidungen von Platin zu vermeiden.

Ein besonderer Vorteil des erfindungsgemäßen Verfahrens besteht darin, dass zumindest Teilschritte oder das gesamte Verfahren kontinuierlich durchführbar ist. Ferner ist es möglich mit dem erfindungsgemäßen Verfahren größer gleich 5 kg hochreines Platin/Tag herzustellen, bevorzugt größer gleich 10 kg hochreines Platin pro Tag. Unter hochreinem Platin wird ein 4N-Platin, vorzugsweise ein 5N-Platin verstanden, wobei sich 4N oder 5N auf die Verunreinigung mit metallischen Verunreinigungen bezieht.

Weiterhin ist es von Vorteil, wenn der erhaltene Platinschwamm gewaschen, getrocknet und geglüht wird, denn auf diese Art und Weise können letzte Verunreinigungen an Stickstoff enthaltenden Salzen, wie Ammoniumchlorid, entfernt werden.

Als gelöstes Hexahalogenoplatinat wird ein gelöstes Hexahalogenoplatinat-Salz, bspw. von Kalium oder Ammonium verstanden.

In dem erfindungsgemäßen Verfahren werden vorteilhaft im Wesentlichen reine, d.h. p.a. Chemikalien oder hochreine Chemikalien und vollentsalztes Wasser (VEW) verwendet. Bevorzugt werden Chemikalien, wie wässrige Salzsäure (chem. rein.) oder Ammoniumchlorid (zur Analyse), eingesetzt die eine Reinheit von mindestens 99,95 Gew.-% aufweisen, besonders bevorzugt größer gleich 99,98 Gew.-% oder vorteilhaft größer gleich 99,99 Gew.-%. Das VEW Wasser weist in der Regel eine Reinheit von größer gleich 99,9999 Gew.-% in Bezug auf metallische Verunreinigungen auf.

Nach dem erfindungsgemäßen Verfahren ist ein Platin erhältlich, das in Summe einen Gehalt an Alkalimetallen von kleiner gleich 0.1 µg/g Platin aufweist, insbesondere kleiner gleich 0.05 µg/g Platin. Gleichfalls ist nach dem erfindungsgemäßen Verfahren ein Platin erhältlich, das in Summe einen Gehalt an Eisen kleiner gleich 1 µg/g im Platin aufweist. Vorteilhaft weist das erhältliche Platin in Summe einen Gehalt an Alkalimetallen von kleiner gleich 0.1 µg/g Platin auf, insbesondere kleiner gleich 0.05 µg/g Platin und einen Gehalt an Eisen von kleiner gleich 1 µg/g Platin. Vorzugsweise ist die Summe an Verunreinigungen an Kalium und Eisen kleiner 1 µg/g. Das Platin liegt vorteilhaft als Platinschwamm vor. Ferner ist ein Platin erhältlich, das in Summe einen Gehalt an Fremdmetallen, die nicht dem Matrixmetall Platin entsprechen, von kleiner gleich 5 Gew.-ppm aufweist.

Weiter ist ein Platin erhältlich nach diesem Verfahren, das eine Reinheit von mindestens 99,999 Gew.-% (5 N fünf neunen) aufweist und dessen Gehalt an anderen Elementen der Platingruppe (Rh, Ru, Ir, Os, Pd) außer Platin kleiner gleich 1,0 µg/g Platin ist.

Ebenfalls ist ein Platin erhältlich nach diesem Verfahren mit einem Gehalt an Platingruppenmetallen, die nicht dem Matrixmetall Platin entsprechen, von kleiner gleich 1,0 µg/g Platin, vorzugsweise kleiner gleich 0,75 µg/g Platin, besonders bevorzugt werden die Gehalte an Platingruppenelementen Pd, Rh, Ru, Ir und Os um den Faktor 10 bis 1000 durch das erfindungsgemäße Verfahren gegenüber dem Gehalt an Platingruppenelementen Pd, Rh, Ru, Ir und Os im Hexahalogenoplatinat vermindert, insbesondere das Hexahalogenoplatinat das mit dem sauren lonentauscher in Kontakt gebracht wird, welches bevorzugt als Kaliumhexachloroplatinat oder Ammoniumhexahalogenoplatinat vorliegt und vorteilhaft Produkt einer standardmäßig durchgeführten Feinreinigung ist. Der Gehalt an Osmium kann mit dem erfindungsgemäßen Verfahren um den Faktor 1000 vermindert werden auf unter 0,001 µg/g Osmium im Platin.

Durch das erfindungsgemäße Verfahren können zusätzlich oder alternativ die Gehalte an den Verunreinigungen mit den Metallen der Kupfergruppe, Gruppe 11 (CAS-Gruppe IB), wie Cu, Ag, Au auf insgesamt kleiner gleich 0,6 µg/g im Platin vermindert werden, insbesondere kleiner gleich 0,5 µg/g, besonders bevorzugt auf kleiner gleich 0,4 µg/g.

Durch das erfindungsgemäße Verfahren können zusätzlich oder alternativ die Gehalte an den Verunreinigungen mit den Elementen der Borgruppe, Gruppe 13 (CAS-Gruppe IIIA), wie B, Al, auf insgesamt kleiner gleich 0,2 µg/g im Platin vermindert werden, insbesondere Aluminium kleiner gleich 0,15 µg/g und Bor kleiner gleich 0,01 µg/g.

Durch das erfindungsgemäße Verfahren können zusätzlich oder alternativ die Gehalte an den Verunreinigungen mit den Elementen Phosphor und/oder Schwefel auf insgesamt kleiner gleich 0,2 µg/g im Platin vermindert werden, vorzugsweise kleiner gleich 0,15 µg/g, insbesondere Phosphor kleiner gleich 0,05 µg/g und Schwefel kleiner gleich 0,1 µg/g.

Durch das erfindungsgemäße Verfahren können zusätzlich oder alternativ die Gehalte an den Verunreinigungen mit den Erdalkalimetallen auf insgesamt kleiner gleich 0,1 µg/g im Platin vermindert werden, vorzugsweise kleiner gleich 0,075 µg/g, insbesondere Calcium kleiner gleich 0,1 µg/g, Magnesium und Barium zusammen kleiner gleich 0,001 µg/g.

Durch das erfindungsgemäße Verfahren kann zusätzlich oder alternativ der Gehalt an der Verunreinigung Silicium auf insgesamt kleiner gleich 1,0 µg/g im Platin vermindert werden, vorzugsweise kleiner gleich 0,9 µg/g. Durch das erfindungsgemäße Verfahren kann zusätzlich oder alternativ der Gehalt an der Verunreinigung Arsen auf insgesamt kleiner gleich 0,5 µg/g im Platin vermindert werden, vorzugsweise kleiner gleich 0,4 µg/g.

Durch das erfindungsgemäße Verfahren können zusätzlich oder alternativ die Gehalte an den Verunreinigungen mit Buntmetallen, wie Cadmium (Cd), Cobalt (Co), Kupfer (Cu), Nickel (Ni), Blei (Pb), Zinn (Sn) und Zink (Zn) auf insgesamt kleiner gleich 0,3 µg/g im Platin vermindert werden, vorzugsweise kleiner gleich 0,2 µg/g, bevorzugt auf kleiner 0,17 µg/g, besonders bevorzugt wird der Gehalt an Verunreinigung mit Cadmium und Cobalt auf kleiner gleich 0,01 µg/g vermindert. Der Gehalt an Cadmium kann auf unter 0,001 µg/g im Platin reduziert werden.

Nach dem erfindungsgemäßen Verfahren gewonnenes hochreines Platin kann verwendet werden in der Mikroelektronik, zur Herstellung von Komponenten in der Mikroelektronik, von Thermoelementen, von Schmuck, von Platinbeschichtungen, von Platindrähten, von Katalysatoren, zur Herstellung von und in Widerstandthermometern, von Herzschrittmachern, von Implantaten, Platin enthaltenden Farben, Platin enthaltenden Pasten, Platin enthaltenden Schleifpasten, Platin enthaltenden Pasten zur Verwendung in elektronischen Bauteilen, Platin enthaltenden Pasten zur Verwendung in elektronischen Bauteilen im Automobil, von Elektroden, zur Herstellung von elektrisch leitenden Druckfarben, von Schleifkontakten und/oder Legierungen. Insbesondere eignet sich das hochreine Platin zur Herstellung von Komponenten und Platinbeschichtungen in der Mikroelektronik und von Thermoelementen.

Die Erfindung wird durch nachstehende Beispiele näher erläutert, ohne jedoch die Erfindung zu beschränken.

### Beschreibung der Analysenmethoden:

GD-MS Messung gemäß Messung gemäß ISO/TS 15338, erste Auflage 2009-04-01 mit folgenden Anpassungen für Platin:
GD-MS Gerät: ElementGD von ThermoFisher Scientific
Probenvorbereitung: Pressen in ein Al-Cup, 30s/23t, Messen als Flachprobe
Plasmabedingungen: I = 32 mA, g = 380 sccm Ar
res. U = 800 V, Krater-Durchmesser: 8 mm
RSF: STANDARD-Satz des Geräteherstellers
ICP-Analysen: ICP-OES Spektrometer: iCAP 6500 DUO (axial/radiale Ausrichtung) der Fa. Thermo; Pt-Vormessung (Bestimmung der Pt-Matrixkonzentration); Für Pt-Vormessung wird die Probe 1:5000 verdünnt: Erste Verdünnung 1:50 erfolgt mit Reinstwasser; mit 1 ml dieser Verdünnungslösung erfolgt die 2. Verdünnung 1:100 mit 10 g Cu/Na/Y-Pufferlösung, 10 ml Salzsäure p.a. und auf 100 ml mit Reinstwasser auffüllen. Anschließend erfolgt Kalibration und Vormessung.

### Reinheitsuntersuchung

In einen 50 ml Messkolben wird die erforderliche Menge aus der Vormessung (rel. ± 3 Gew.-%) eingewogen. Es werden 20 ml HCl Suprapur und 5 ml HNO₃ Suprapur hinzugefügt und mit Reinstwasser aufgefüllt. Es werden jeweils Doppelbestimmungen durchgeführt.

Der erfindungsgemäß gewonnene Platinschwamm bzw. Platinpulver besitzt eine Reinheit, die deutlich unter der Nachweisgrenze der Glimmentladung-Spektrometrie (GD-OES) liegt, so dass nur die Vergleichsbeispiele mittels GD-OES analysiert wurden. GD-OES Analysen (Vergleichsbeispiele): ARL-3580, Horiba GD-Profiler HR, Probendurchmesser 22 bis 100 mm, Probendicke 2 bis 40 mm, Probenmenge größer gleich 10 g, Probenoberfläche plan, Schliff.

### Beispiel 1

Einsatz: 71,489 kg K₂PtCl₆, (28452 g Pt), Kationenaustauscher Amberjet® 1500H, 9 l Salzsäure (chem. rein, 37 gew.-%ig), 18,9 kg Ammoniumchlorid, 30,5 l Levoxin® 22 (wässrige N₄H₂·H₂O-Lösung mit 22 Gew.-% N₄H₂, erhältlich bei Lanxess), VEW (vollentsalztes Wasser)

Durchführung: K₂PtCl₆ wird in 70 °C heißem VEW gelöst und über den Kationenaustauscher gepumpt. Die erhaltene H₂PtCl₆-Lösung wird im Umlaufverdampfer bis 130°C eingedampft. Es wird eine Probe der H₂PtCl₆-Lösung für Reinheitsanalyse mittels ICP entnommen. Diese Lösung wird in einem Kessel mit 9 l Salzsäure versetzt und mit VEW auf 200 l aufgefüllt. Diese Pt-Salzlösung wird bei 20°C langsam unter schnellem Rühren zu einer Ammoniumchloridlösung (18,9 kg NH₄Cl, gelöst in 100 l VEW) gepumpt und 90 min nachgerührt. Nach dem Absitzen des (NH₄)₂PtCl₆ Salzes wird dieses über eine Nutsche abfiltriert und trockengesaugt. 66,6 kg (NH₄)₂PtCl₆ Salz (feucht) wurde mit 800 l VEW im Kessel vorgelegt. Die Suspension wurde unter Rühren auf 65°C erhitzt. Bei pH 2,7 wurden über einen Zeitraum von 4 Stunden insgesamt 30,5 l Levoxinlösung mit einer Dosiergeschwindigkeit von 0,115 l/min zugegeben. Dabei stieg die Temperatur auf 74 °C an. Im Anschluss wurde für 3 Stunden bei 95 °C überschüssiges Hydrazin verkocht. Die Mutterlauge wird dekantiert und der Pt-Schwamm zweimal mit je 500 l VEW gewaschen. Anschließend wird der Pt-Schwamm über eine Nutsche abgesaugt und mit 500 l heißem VEW chloridfrei gewaschen. Der Schwamm wird für 1,5 h bei 800°C geglüht. Ausbeute: 26.690 g Pt-Schwamm
Bei Durchführung der Reduktion in saurer Lösung (pH 0-4) bleiben die Eisensalze in Lösung und führen zu keiner Verunreinigung des Pt-Schwamms. Die Verwendung von (NH₄)₂PtCl₆ als Ausgangsverbindung für die Reduktion hat zusätzlich den Vorteil, dass dessen Herstellung einen weiteren Reinigungsschritt durch Ausfällung des schwerlöslichen (NH₄)₂PtCl₆ einschließt. Insbesondere noch enthaltene Spuren anderer Edelmetalle lassen sich aufgrund dieser Fällung aus verdünnter Lösung gut abtrennen. Die direkte Verwendung von K₂PtCl₆ bzw. des durch lonenaustausch hieraus erzeugten H₂PtCl₆ in der Hydrazin-Reduktion führen gewöhnlich zu schlechterer Produktqualität des Platinschwamms und insbesondere höheren (Kalium-) Verunreinigungsanteilen, die sich mitunter nicht vollständig auswaschen lassen (Beispiele 3 und 4). Noch im Pt-Schwamm enthaltene Ammoniumsalzreste lassen sich durch Glühen des Schwamms bei 800°C vollständig entfernen.

Reinheitsanalyse der H₂PtCl₆-Lösung (ICP), (µg/g Pt):

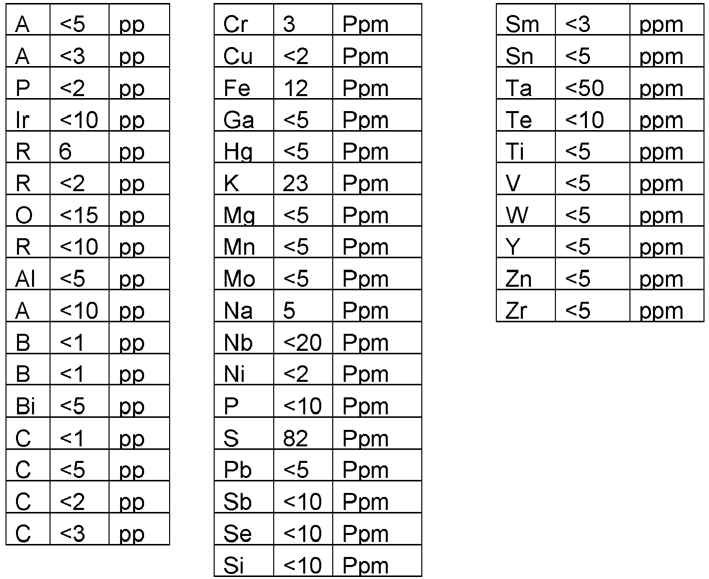

Reinheitsanalyse des Pt-Schwamms (GDMS), (µg/g Pt):

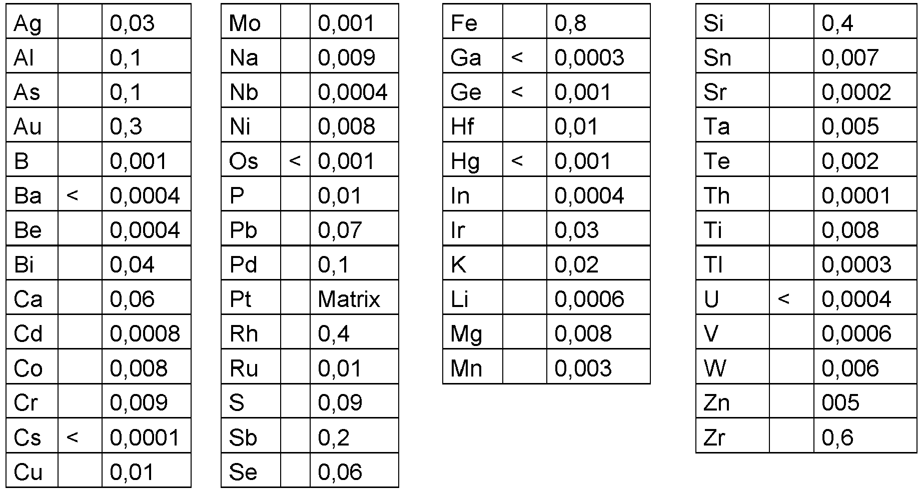

### Beispiel 2:

Durchführung analog Beispiel 1 mit folgenden Einsatzmengen: Einsatz: 126,917 kg K₂PtCl₆, (feucht), Kationenaustauscher Amberjet® 1500H, 14 l Salzsäure (chem. rein, 37 %), 31,0 kg Ammoniumchlorid, 56 l Levoxin® (22 %), VEW

### ICP-Analyse H2[PtCl6]-Lösung:

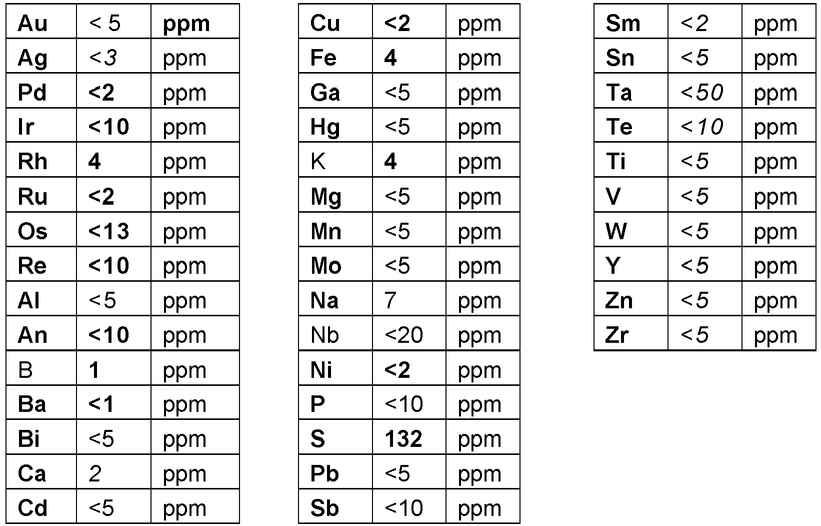

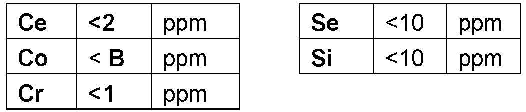

Reinheitsanalyse des Pt-Schwamms (GDMS), (µg/g Pt):

| | | |
|---|---|---|
| Ag | | 0,03 |
| Al | | 0,04 |
| As | | 0,2 |
| Au | | 0,2 |
| B | | 0,001 |
| Ba | < | 0,0002 |
| Be | | 0,0006 |
| Bi | | 0,009 |
| Ca | | 0,03 |
| Cd | | 0,0006 |
| Co | | 0,003 |
| Cr | | 0,02 |
| Cs | < | 0,0002 |
| Cu | | 0,04 |
| Fe | | 0,5 |
| Ga | | 0,0008 |
| Ge | | 0,0009 |
| Hf | | 0,01 |
| Hg | < | 0,004 |
| In | | 0,003 |
| Ir | | 0,03 |
| K | | 0,05 |
| Li | | 0,0004 |
| Mg | | 0,005 |
| Mn | | 0,005 |
| Mo | | 0,001 |
| Na | | 0,05 |
| Nb | | 0,001 |
| Ni | | 0,008 |
| Os | | 0,001 |
| P | | 0,006 |
| Pb | | 0,03 |
| Pd | | 0,05 |
| Pt | | Matrix |
| Rh | | 0,4 |
| Ru | | 0,01 |
| S | | 0,04 |
| Sb | | 0,02 |
| Se | | 0,05 |
| Si | | 0,8 |
| Sn | | 0,01 |
| Sr | | 0,0006 |
| Ta | | 0,009 |
| Te | | 0,002 |
| Th | | 0,0003 |
| Ti | | 0,01 |
| Tl | | 0,0003 |
| U | | 0,0004 |
| V | | 0,0005 |
| W | | 0,002 |
| Zn | | 0,04 |
| Zr | | 0,4 |

### Beispiel 3 (gemäß EP 1061145) zum Vergleich

Einsatz: 77,232 kg K₂PtCl₆ trocken, Kationenaustauscher Amberjet® 1500H, 35 l Levoxin® (22 %) (Hydrazin, Hydrochinon-Aktivator), VEW
Durchführung: K₂PtCl₆ Salz wird in 3700 l 70 °C heißem VEW gelöst und über den Kationenaustauscher gepumpt. Die erhaltene H₂PtCl₆-Lösung wird im Umlaufverdampfer bis auf 800 l eingedampft. 800 l H₂PtCl₆-Lösung werden im Kessel vorgelegt und die Lösung unter Rühren auf 70°C erhitzt. Über einen Zeitraum von 4 Stunden werden insgesamt 35 l Levoxinlösung zugegeben. Im Anschluss wurde für 1 Stunde bei 95°C überschüssiges Hydrazin verkocht. Nach Abkühlen auf 30°C wird die Mutterlauge dekantiert und der Pt-Schwamm zweimal mit je 300 l VEW gewaschen. Anschließend wird der Pt-Schwamm über eine Nutsche abgesaugt und mit 600 l heißem VEW chloridfrei gewaschen. Der Schwamm wird für 2 h bei 900°C geglüht. Ausbeute: 30.063 g Pt-Schwamm

Reinheitsanalyse des K₂PtCl₆-Salzes (ICP), (µg/g Pt):

| | | | |
|---|---|---|---|
| Ag | < 3 | Pd | 6 |
| Au | < 5 | Ir | < 10 |
| Rh | < 3 | Ru | < 2 |
| Os | < 15 | Re | < 10 |
| Al | < 5 | As | < 10 |
| B | < 1 | Ba | < 1 |
| Bi | < 5 | Ca | < 1 |
| Cd | < 5 | Ce | < 2 |
| Co | < 3 | Cr | < 1 |
| Cu | < 2 | Fe | 4 |
| Mg | < 5 | Mn | < 5 |
| Mo | < 5 | Nb | < 3 |
| Ni | < 2 | P | < 15 |
| Pb | < 5 | Sb | < 5 |
| Si | < 10 | Sn | < 5 |
| Ta | < 20 | Te | < 10 |
| Ti | < 5 | V | < 5 |
| W | < 5 | Y | < 5 |
| Zn | < 5 | Zr | < 5 |

Reinheitsanalyse des Pt-Schwamms (GD-OES), (µg/g Pt):

| | | | |
|---|---|---|---|
| Ag | 3 | Pd | 2 |
| Au | 5 | Ir | < 10 |
| Rh | < 3 | Ru | < 2 |
| Os | < 15 | Re | < 10 |
| Al | < 5 | As | < 10 |
| B | < 1 | Ba | < 1 |
| Bi | < 5 | Ca | < 1 |
| Cd | < 5 | Ce | < 20 |
| Co | < 3 | Cr | < 1 |
| Cu | < 2 | Fe | 4 |
| Mg | < 5 | Mn | < 5 |
| Mo | < 5 | Sb | < 10 |
| Ni | < 2 | Sn | < 5 |
| Pb | < 5 | V | < 5 |
| Si | < 10 | Y | < 5 |
| Ta | < 50 | Zr | < 5 |
| Ti | < 5 | | |
| W | < 5 | | |
| Zn | < 5 | | |

### Beispiel 4 (gemäß EP 1061145) zum Vergleich

Einsatz: 52,622 kg K₂PtCl₆ feucht, Kationenaustauscher Amberjet® 1500H, 22 l Levoxin® (22 %), VEW
Durchführung: K₂PtCl₆ Salz wird in 2400 l 70 °C heißem VEW gelöst und über einen Kationenaustauscher gepumpt. Die erhaltene H₂PtCl₆-Lösung wird im Umlaufverdampfer bis auf 800 l eingedampft. 800 l H₂PtCl₆-Lösung werden im Kessel vorgelegt und die Lösung unter Rühren auf 70°C erhitzt. Über einen Zeitraum von 4 Stunden werden insgesamt 22 l Levoxinlösung zugegeben. Im Anschluss wurde für 2 Stunden bei 95°C überschüssiges Hydrazin verkocht. Nach Abkühlen auf 30°C wird die Mutterlauge dekantiert und der Pt-Schwamm zweimal mit je 300 l VEW gewaschen. Anschließend wird der Pt-Schwamm über eine Nutsche abgesaugt und mit 1000 l heißem VEW chloridfrei gewaschen. Der Schwamm wird für 3 h bei 900°C geglüht. Ausbeute: 19.656 g Pt-Schwamm.

Reinheitsanalyse des K₂PtCl₆-Salzes (ICP), (µg/g Pt):

| | | | |
|---|---|---|---|
| Ag | < 3 | Pd | 6 |
| Au | < 5 | Ir | < 10 |
| Rh | < 3 | Ru | < 2 |
| Os | < 15 | Re | < 10 |
| Al | < 5 | As | < 10 |
| B | < 1 | Ba | < 1 |
| Bi | < 5 | Ca | < 1 |
| Cd | < 5 | Ce | < 2 |
| Co | < 3 | Cr | < 1 |
| Cu | < 2 | Fe | 12 |
| Mg | < 5 | Mn | < 5 |
| Mo | < 5 | Nb | < 3 |
| Ni | < 2 | P | < 15 |
| Pb | < 5 | Sb | < 5 |
| Si | < 10 | Sn | < 5 |
| Ta | < 20 | Te | < 10 |
| Ti | < 5 | V | < 5 |
| W | < 5 | Y | < 5 |
| Zn | < 5 | Zr | < 5 |

Reinheitsanalyse des Pt-Schwamms (GD-OES), (µg/g Pt):

| | | | |
|---|---|---|---|
| Ag | 3 | Pd | 2 |
| Au | 6 | Ir | < 10 |
| Rh | 3 | Ru | 10 |
| Os | < 15 | Re | < 10 |
| Al | 7 | As | < 10 |
| B | < 1 | Ba | < 1 |
| Bi | < 5 | Ca | < 1 |
| Cd | < 5 | Ce | < 20 |
| Co | < 3 | Cr | 1 |
| Cu | 3 | Fe | 9 |
| Mg | < 5 | Mn | < 5 |
| Mo | < 5 | Sb | < 10 |
| Ni | < 2 | Sn | < 5 |
| Pb | < 5 | V | < 5 |
| Si | < 10 | Y | < 5 |
| Ta | < 50 | Zn | < 5 |
| Ti | < 5 | Zr | < 5 |
| W | < 5 | | |

### Beispiel 5 (Elektrolyse) zum Vergleich

Einsatz: 165,123kg K₂PtCl₆ feucht, Kationenaustauscher Amberjet® 1500H, VEW

Durchführung: K₂PtCl₆ Salz wird in 7400 l heißem VEW gelöst und über einen Kationenaustauscher gepumpt. Die H₂PtCl₆-Lösung wird kontinuierlich in die Elektrolysezelle eingepumpt und Pt-Pulver bei einer Betriebstemperatur von ca. 50°C elektrolytisch abgeschieden. Anschließend wird das Pt-Pulver über eine Nutsche abgesaugt und mit 1200 l heißem VEW chloridfrei gewaschen. Das Pulver wird für 3 h bei 900°C geglüht.
Ausbeute: 60.525 g Pt-Pulver

Reinheitsanalyse des K₂PtCl₆-Salzes (ICP), (µg/g Pt):

| | | | |
|---|---|---|---|
| Ag | < 3 | Pd | 2 |
| Au | < 5 | Ir | < 10 |
| Rh | 16 | Ru | 3 |
| Os | < 15 | Re | < 10 |
| Al | < 5 | As | < 10 |
| B | 1 | Ba | < 1 |
| Bi | < 5 | Ca | < 1 |
| Cd | < 5 | Ce | < 2 |
| Co | < 3 | Cr | 1 |
| Cu | 2 | Fe | 5 |
| Mg | < 5 | Mn | < 5 |
| Mo | < 5 | Nb | < 3 |
| Ni | < 2 | P | < 15 |
| Pb | < 5 | Sb | < 5 |
| Si | < 10 | Sn | < 5 |
| Ta | < 20 | Te | < 10 |
| Ti | < 5 | V | < 5 |
| W | < 5 | Y | < 5 |
| Zn | < 5 | Zr | < 5 |

Analyse des Pt-Schwamms (GD-OES), (µg/g Pt):

| | | | |
|---|---|---|---|
| Ag | < 3 | Pd | < 2 |
| Au | < 5 | Ir | < 10 |
| Rh | 16 | Ru | < 2 |
| Os | < 15 | Re | < 10 |
| Al | < 5 | As | < 10 |
| B | < 1 | Ba | < 1 |
| Bi | < 5 | Ca | < 1 |
| Cd | < 5 | Ce | < 20 |
| Co | < 3 | Cr | < 1 |
| Cu | < 2 | Fe | 3 |
| Mg | < 5 | Mn | < 5 |
| Mo | < 5 | Nb | < 20 |
| Ni | < 2 | P | < 10 |
| Pb | < 5 | Sb | < 10 |
| Si | < 10 | Sn | < 5 |
| Ta | < 50 | Te | < 5 |
| Ti | < 5 | V | < 5 |
| W | < 5 | Y | < 5 |
| Zn | < 5 | Zr | < 5 |

### Beispiel 6

Einsatz: 140,469 kg K₂PtCl₆ feucht, (50.875 g Pt), Kationenaustauscher Amberjet® 1500H, 30 l Salzsäure (chem. rein, 37 %), 70 kg Ammoniumchlorid, 70 l Levoxin® (22 %), VEW (vollentsalztes Wasser)

Durchführung: K₂PtCl₆ wird in 70 °C heißem VEW gelöst und über den Kationenaustauscher gepumpt. Die erhaltene H₂PtCl₆-Lösung wird im Umlaufverdampfer bis 130°C eingedampft und anschließend in einen sauberen Transportbehälter filtriert.
In einem Kessel werden 70 kg Ammoniumchlorid p. a. in 360 l VEW gelöst und mit 30 l Salzsäure chem. rein. versetzt. Nachdem die Lösung auf 65 ± 5 °C erhitzt wurde, wird die oben erhaltene H₂PtCl₆-Lösung mit 40 l/h zugegeben und 90 min nachgerührt. Nach dem Absitzen des (NH₄)₂PtCl₆ Salzes wird die überstehende Mutterlauge bestmöglich dekantiert. Zum Niederschlag werden 20 kg Ammoniumchlorid p. a. und 300 l VEW gegeben, die Fällung unter Rühren ausgewaschen und nach dem Absitzen erneut dekantiert. 800 l VEW zum (NH₄)2PtCl₆-Niederschlag geben und auf 60 °C ± 5 erhitzen. 70 l Levoxinlösung mit einer Dosiergeschwindigkeit von 0,1 l/min zugeben. Im Anschluss wurde für 3 Stunden bei 95 °C überschüssiges Hydrazin verkocht. Die Mutterlauge wird dekantiert und der Pt-Schwamm einmal mit 300 l VEW + 50 l Salzsäure chem. rein bei 60° C gewaschen. Nach Dekantieren wird nochmals mit 500 l VEW im Kessel gewaschen. Anschließend wird der Pt-Schwamm über eine Nutsche abgesaugt und portionsweise mit 700 l heißem VEW chloridfrei gewaschen. Der Schwamm wird für 1,5 h bei 800°C geglüht. Ausbeute: 50.598 g Pt-Schwamm

Reinheitsanalyse des K₂PtCl₆-Salzes (ICP), (µg/g Pt):

| | | | |
|---|---|---|---|
| Ag | < 3 | Pd | < 2 |
| Au | 30 | Ir | < 10 |
| Rh | 4 | Ru | <2 |
| Os | < 15 | Re | < 10 |
| Al | < 5 | As | < 10 |
| B | 5 | Ba | < 1 |
| Bi | < 5 | Ca | 3 |
| Cd | < 5 | Ce | < 2 |
| Co | < 3 | Cr | < 1 |
| Cu | < 2 | Fe | < 3 |
| Mg | < 5 | Mn | < 5 |
| Mo | < 5 | Nb | < 3 |
| Ni | < 2 | P | < 15 |
| Pb | < 5 | Sb | < 5 |
| Si | 12 | Sn | 7 |
| Ta | < 20 | Te | < 10 |
| Ti | < 5 | V | < 5 |
| W | < 5 | Y | < 5 |
| Zn | < 5 | Zr | < 5 |

Reinheitsanalyse des Pt-Schwamms (GDMS), (µg/g Pt):

| | | | |
|---|---|---|---|
| Ag | 0,02 | Mo | 0,001 |
| Al | 0,04 | Na | 0,02 |
| As | 0,08 | Nb | 0,0002 |
| Au | 1,2 | Ni | 0,006 |
| B | 0,002 | Os | 0,002 |
| Ba | 0,005 | P | 0,005 |
| Be | < 0,001 | Pb | 0,06 |
| Bi | 0,01 | Pd | 1,4 |
| Ca | 0,08 | Pt | Matrix |
| Cd | 0,003 | Rh | 0,5 |
| Co | 0,0009 | Ru | 0,1 |
| Cr | 0,004 | S | 0,1 |
| Cs | 0,0001 | Sb | 0,03 |
| Cu | 0,01 | Se | 0,003 |
| Fe | 0,3 | Si | 0,6 |
| Ga | 0,0004 | Sn | 0,05 |
| Ge | < 0,01 | Sr | 0,001 |
| Hf | < 0,001 | Ta | 0,005 |
| Hg | 0,005 | Te | 0,007 |
| In | 0,001 | Th | 0,0001 |
| Ir | 0,09 | Ti | 0,005 |
| K | 0,1 | TI | 0,001 |
| Li | 0,0007 | U | 0,0002 |
| Mg | 0,003 | V | 0,0003 |
| Mn | 0,002 | W | 0,004 |
| | | Zn | 0,02 |
| | | Zr | 0,03 |

## Patentansprüche

1. Verfahren zur Herstellung von hochreinem Platin, **gekennzeichnet durch**,
- Herstellen einer Mischung umfassend ein Stickstoff enthaltendes Hexahalogenoplatinat und Wasser in Form einer Suspension eines Stickstoff enthaltenden Hexahalogenoplatinats und Wasser, wobei die resultierende Mischung einen pH-Wert von 0 bis 4 aufweist oder Einstellen eines pH-Wertes von 0 bis 4, und wobei das Stickstoff enthaltende Hexahalogenoplatinat hergestellt wird, indem eine Lösung eines Dihydrogenhexahalogenoplatinats in Gegenwart von Ammoniumchlorid in Ammoniumhexahalogenoplatinat überführt wird, und wobei die Lösung des Dihydrogenhexahalogenoplatinats hergestellt wird, indem ein gelöstes Hexahalogenoplatinat mit einem sauren lonentauscher in Kontakt gebracht wird,
- Erwärmen der Mischung auf eine Temperatur größer gleich 30 °C,
- Durchführen einer Reduktion unter Zugabe eines Reduktionsmittels zur Ausfällung von Platin in Form eines Platinschwamms, ferner **dadurch gekennzeichnet, dass** der pH-Wert während der Reduktion zwischen 0 bis 4 liegt und dass als Reduktionsmittel Hydrazin, Hydrazinhydrat, Ascorbinsäure, Ameisensäure, oder Oxalsäure verwendet wird oder Hydrochinone eingesetzt werden oder Hydrochinone in einer Zusammensetzung mit einem der Reduktionsmittel Hydrazin, Hydrazinhydrat, Ascorbinsäure, Ameisensäure, oder Oxalsäure eingesetzt werden.

2. Verfahren nach Anspruch 1, **dadurch gekennzeichnet, dass**
- das Hexahalogenoplatinat eine Löslichkeit in Wasser von kleiner gleich 8 g/1000 mL bei 20 °C hat, insbesondere kleiner gleich 7,0 g/1000 mL bei 20 °C.

3. Verfahren nach einem der Ansprüche 1 oder 2, **dadurch gekennzeichnet, dass** das Hexahalogenoplatinat ein Hexachloroplatinat ist.

4. Verfahren nach einem der Ansprüche 1 bis 3, **dadurch gekennzeichnet, dass** das Stickstoff enthaltende Hexahalogenoplatinat in Gegenwart des Reduktionsmittels Platin in Form eines Platinschwamms bildet und als Nebenprodukt ein unter thermischen Bedingungen zersetzbares Salz und/oder wasserlösliches Salz bildet.

5. Verfahren nach einem der Ansprüche 1 bis 4, **dadurch gekennzeichnet, dass** das Hexahalogenoplatinat Ammoniumhexachloroplatinat ist.

6. Verfahren nach einem der Ansprüche 1 bis 5, **dadurch gekennzeichnet, dass** die Mischung auf 35 bis 80 °C erwärmt wird, vorzugsweise wird gerührt.

7. Verfahren nach einem der Ansprüche 1 bis 6, **dadurch gekennzeichnet, dass** während der Zugabe des Reduktionsmittels die Temperatur unterhalb 80 °C gehalten wird.

8. Verfahren nach einem der Ansprüche 1 bis 7, **dadurch gekennzeichnet, dass** nach der Zugabe des Reduktionsmittels die Temperatur der resultierenden Reaktionsmischung auf größer gleich 85 °C eingestellt wird.

9. Verfahren nach Anspruch 8, **dadurch gekennzeichnet, dass** nach der Zugabe des Reduktionsmittels die Temperatur der resultierenden Reaktionsmischung auf größer gleich 90 °C eingestellt wird, insbesondere für 1 bis 10 Stunden.

10. Verfahren nach einem der Ansprüche 1 bis 9, **dadurch gekennzeichnet, dass** das Stickstoff enthaltende Hexahalogenoplatinat hergestellt wird, indem eine Lösung eines Dihydrogenhexahalogenoplatinat im Sauren in ein Stickstoff enthaltendes Hexahalogenoplatinat überführt wird.

11. Verfahren nach einem der Ansprüche 1 bis 10, **dadurch gekennzeichnet, dass** das Dihydrogenhexahalogenoplatinat ein Dihydrogenhexachloroplatinat ist, das in Gegenwart von Ammoniumchlorid in Ammoniumhexachloroplatinat überführt wird, insbesondere bildet das Ammoniumhexachloroplatinat einen Niederschlag.

12. Verfahren nach einem der Ansprüche 1 bis 11, **dadurch gekennzeichnet, dass** die Lösung des Dihydrogenhexahalogenoplatinat hergestellt wird, indem ein Alkalihexahalogenoplatinat oder ein Ammoniumhexahalogenoplatinat mit einem sauren lonentauscher in Kontakt gebracht wird.

13. Verfahren nach Anspruch 12, **dadurch gekennzeichnet, dass** die Lösung des Dihydrogenhexahalogenoplatinat hergestellt wird, indem ein Kaliumhexahalogenoplatinat mit einem sauren lonentauscher in Kontakt gebracht wird.

14. Verfahren nach einem der Ansprüche 1 bis 13, **dadurch gekennzeichnet, dass** der Platinschwamm abgetrennt, optional gewaschen wird, und thermisch bei einer Temperatur größer gleich 350 °C behandelt wird, vorzugsweise bei einer Temperatur oberhalb 400 °C.

15. Verfahren nach einem der Ansprüche 1 bis 14, gefolgt von einem Abtrennen des Platinschwamms, optional Waschen des Platinschwamms mit Salzsäure und vollentsalztem Wasser, und einer thermischen Behandlung des Platinschwamms bei einer Temperatur oberhalb 350°C.

16. Verfahren nach einem der Ansprüche 1 bis 15, **dadurch gekennzeichnet, dass** Teilschritte oder das gesamte Verfahren kontinuierlich durchgeführt werden.

17. Verfahren nach einem der Ansprüche 1 bis 16, **dadurch gekennzeichnet, dass** mit dem Verfahren größer gleich 5 kg hochreines Platin/24 Stunden hergestellt werden.

## Claims

1. A method for the production of highly pure platinum, **characterised by**
- producing a mixture comprising a nitrogen-containing hexahalogenoplatinate and water in the form of a suspension of a nitrogen-containing hexahalogenoplatinate and water, wherein the resulting mixture has a pH value of 0 to 4 or setting a pH value of 0 to 4, and wherein the nitrogen-containing hexahalogenoplatinate is produced in that a solution of a dihydrogen hexahalogenoplatinate is converted into ammonium hexahalogenoplatinate in the presence of ammonium chloride, and wherein the solution of the dihydrogen hexahalogenoplatinate is produced in that a dissolved hexahalogenoplatinate is brought into contact with an acidic ion exchanger,
- heating the mixture to a temperature of greater than or equal to 30°C,
- carrying out a reduction by adding a reducing agent to precipitate platinum in the form of a platinum sponge, further **characterised in that** the pH value lies between 0 to 4 during the reduction, and that hydrazine, hydrazine hydrate, ascorbic acid, formic acid, or oxalic acid is used as reducing agent, or hydroquinones are used, or hydroquinones are used in a composition with one of the reducing agents hydrazine, hydrazine hydrate, ascorbic acid, formic acid, or oxalic acid.

2. The method according to claim 1, **characterised in that**
- the hexahalogenoplatinate has a solubility in water of less than or equal to 8 g/1000 mL at 20°C, in particular less than or equal to 7.0 g/1000 mL at 20°C.

3. The method according to any one of claims 1 or 2, **characterised in that** the hexahalogenoplatinate is a hexachloroplatinate.

4. The method according to any one of claims 1 to 3, **characterised in that** in the presence of the reducing agent, the nitrogen-containing hexahalogenoplatinate forms platinum in the form of a platinum sponge, and forms a salt, which is decomposable under thermal conditions, and/or a watersoluble salt as by-product.

5. The method according to any one of claims 1 to 4, **characterised in that** the hexahalogenoplatinate is ammonium hexachloroplatinate.

6. The method according to any one of claims 1 to 5, **characterised in that** the mixture is heated to 35 to 80°C, preferably stirring is performed.

7. The method according to any one of claims 1 to 6, **characterised in that** the temperature is held below 80°C while adding the reducing agent.

8. The method according to any one of claims 1 to 7, **characterised in that** the temperature of the resulting reaction mixture is set to greater than or equal to 85°C after adding the reducing agent.

9. The method according to claim 8, **characterised in that** the temperature of the resulting reaction mixture is set to greater than or equal to 90°C after adding the reducing agent, in particular for 1 to 10 hours.

10. The method according to any one of claims 1 to 9, **characterised in that** the nitrogen-containing hexahalogenoplatinate is produced **in that** a solution of a dihydrogen hexahalogenoplatinate is converted into a nitrogen-containing hexahalogenoplatinate in an acidic environment.

11. The method according to any one of claims 1 to 10, **characterised in that** the dihydrogen hexahalogenoplatinate is a dihydrogen hexachloroplatinate, which is converted into ammonium hexachloroplatinate in the presence of ammonium chloride, the ammonium hexachloroplatinate in particular forms a precipitate.

12. The method according to any one of claims 1 to 11, **characterised in that** the solution of the dihydrogen hexahalogenoplatinate is produced **in that** an alkali hexahalogenoplatinate or an ammonium hexahalogenoplatinate is brought into contact with an acidic ion exchanger.

13. The method according to claim 12, **characterised in that** the solution of the dihydrogen hexahalogenoplatinate is produced **in that** a potassium hexahalogenoplatinate is brought into contact with an acidic ion exchanger.

14. The method according to any one of claims 1 to 13, **characterised in that** the platinum sponge is separated, optionally washed, and is thermally treated at a temperature of greater than or equal to 350°C, preferably at a temperature above 400°C.

15. The method according to any one of claims 1 to 14, followed by a separating of the platinum sponge, optionally washing of the platinum sponge with hydrochloric acid and demineralised water, and a thermal treatment of the platinum sponge at a temperature above 350°C.

16. The method according to any one of claims 1 to 15, **characterised in that** partial steps or the entire method are performed continuously.

17. The method according to any one of claims 1 to 16, **characterised in that** more than or equal to 5 kg of highly pure platinum/24 hours are produced by means of the method.

## Revendications

1. Procédé de production de platine de haute pureté, **caractérisé par**
- la production d'un mélange composé d'un hexahalogénoplatinate contenant de l'azote et d'eau, sous la forme d'une suspension d'un hexahalogénoplatinate contenant de l'azote et d'eau, le mélange obtenu présentant un pH de 0 à 4 ou une définition du pH de 0 à 4, et l'hexahalogénoplatinate contenant de l'azote étant produit par la transformation d'une solution d'un hexahalogénoplatinate de dihydrogène en présence de chlorure d'ammonium dans un hexahalogénoplatinate d'ammonium, et la solution d'hexahalogénoplatinate de dihydrogène étant produite par la mise en contact d'un hexahalogénoplatinate dissous avec un échangeur d'ions acides,
- le chauffage du mélange à une température supérieure ou égale à 30°C,
- la réalisation d'une réduction avec l'ajout d'un agent réducteur pour la précipitation du platine sous la forme d'une mousse de platine, **caractérisée en outre en ce que** le pH se situe entre 0 et 4 pendant la réduction et, **en ce que** l'agent réducteur utilisé est de l'hydrazine, de l'hydrate d'hydrazine, de l'acide ascorbique, de l'acide formique ou de l'acide oxalique ou bien des hydroquinones ou encore des hydroquinones dans une composition avec l'un des agents réducteurs mentionnés : hydrazine, hydrate d'hydrazine, acide ascorbique, acide formique ou acide oxalique.

2. Procédé conformément à la revendication 1, **caractérisé en ce que**
- l'hexahalogénoplatinate a une solubilité dans l'eau inférieure ou égale à 8 g/1000 ml à 20°C, en particulier inférieure ou égale à 7,0 g/1000 ml à 20°C.

3. Procédé conformément à l'une des revendications 1 ou 2, **caractérisé en ce que** l'hexahalogénoplatinate est un hexachloroplatinate.

4. Procédé conformément à l'une des revendications 1 à 3, **caractérisé en ce que** l'hexahalogénoplatinate contenant de l'azote forme, en présence de l'agent réducteur, du platine sous la forme d'une mousse de platine et forme, comme sous-produit, un sel décomposable dans des conditions thermiques et/ou un sel soluble dans l'eau.

5. Procédé conformément à l'une des revendications 1 à 4, **caractérisé en ce que** l'hexahalogénoplatinate est un hexachloroplatinate d'ammonium.

6. Procédé conformément à l'une des revendications 1 à 5, **caractérisé en ce que** le mélange est chauffé à une température de 35°C à 80°C, préférablement est agité.

7. Procédé conformément à l'une des revendications 1 à 6, **caractérisé en ce que** la température est maintenue en dessous de 80°C pendant l'ajout de l'agent réducteur.

8. Procédé conformément à l'une des revendications 1 à 7, **caractérisé en ce que** la température du mélange de réaction obtenu est réglée à une valeur supérieure ou égale à 85°C après l'ajout de l'agent réducteur.

9. Procédé conformément à la revendication 8, **caractérisé en ce que** la température du mélange de réaction obtenu est réglée à une valeur supérieure ou égale à 90°C, en particulier pendant 1 à 10 heures, après l'ajout de l'agent réducteur.

10. Procédé conformément à l'une des revendications 1 à 9, **caractérisé en ce que** l'hexahalogénoplatinate contenant de l'azote est produit par la transformation d'une solution d'un hexahalogénoplatinate de dihydrogène en milieu acide dans un hexahalogénoplatinate contenant de l'azote.

11. Procédé conformément à l'une des revendications 1 à 10, **caractérisé en ce que** l'hexahalogénoplatinate de dihydrogène est un hexachloroplatinate de dihydrogène qui est transformé en présence de chlorure d'ammonium dans un hexachloroplatinate d'ammonium, l'hexachloroplatinate d'ammonium formant en particulier une précipitation.

12. Procédé conformément à l'une des revendications 1 à 11, **caractérisé en ce que** la solution d'hexahalogénoplatinate de dihydrogène est produite par la mise en contact d'un hexahalogénoplatinate alcalin ou d'un hexahalogénoplatinate d'ammonium avec un échangeur d'ions acides.

13. Procédé conformément à la revendication 12, **caractérisé en ce que** la solution d'hexahalogénoplatinate de dihydrogène est produite par la mise en contact d'un hexahalogénoplatinate de potassium avec un échangeur d'ions acides.

14. Procédé conformément à l'une des revendications 1 à 13, **caractérisé en ce que** la mousse de platine est séparée, lavée facultativement et traitée thermiquement à une température supérieure ou égale à 350°C, préférablement à une température supérieure à 400°C.

15. Procédé conformément à l'une des revendications 1 à 14, suivi d'une séparation de la mousse de platine, d'un lavage facultatif de la mousse de platine avec de l'acide chlorhydrique et de l'eau déminéralisée et d'un traitement thermique de la mousse de platine à une température supérieure à 350°C.

16. Procédé conformément à l'une des revendications 1 à 15, **caractérisé en ce que** l'ensemble du procédé ou des étapes partielles de celui-ci sont réalisées en continu.

17. Procédé conformément à l'une des revendications 1 à 16, **caractérisé en ce qu'**une quantité supérieure ou égale à 5 kg de platine de haute pureté est produite en 24 heures au moyen du procédé.
